Europäisches Patentamt

European Patent Office

Office européen des brevets

(11) Veröffentlichungsnummer: **0 374 893**

**A2**

## EUROPÄISCHE PATENTANMELDUNG

(21) Anmeldenummer: **89123570.7**

(22) Anmeldetag: **20.12.89**

(51) Int. Cl.5 **B60R 22/26, B60R 22/20**

(30) Priorität: **22.12.88 DE 3843308**

(43) Veröffentlichungstag der Anmeldung:
**27.06.90 Patentblatt 90/26**

(84) Benannte Vertragsstaaten:
**DE ES FR GB IT SE**

(71) Anmelder: **Autoliv-Kolb GmbH & Co. KG**
**Theodor-Heuss-Strasse 2**
**D-8060 Dachau(DE)**

(72) Erfinder: **Anderson, Sture**
**Luxbacken 1 Lilla Essingen**
**S-10545 Stockholm(SE)**
Erfinder: **Haland, Ingve**
**P.O. Box 104**
**S-44700 Vargarda(SE)**
Erfinder: **Skanberg, Torbjörn**
**P.O. Box 104**
**S-44700 Vargarda(SE)**
Erfinder: **Knabel, Walter, Dr.**
**Theodor-Heuss-Strasse 2**
**D-8060 Dachau(DE)**
Erfinder: **Notar, Walter**
**Theodor-Heuss-Strasse 2**
**D-8060 Dachau(DE)**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Philipps**
**- Dr. P.B. Schäuble Dr. S. Jackermeier -**
**Dipl.-Ing. A. Zinnecker**
**Widenmayerstrasse 23 D-8000 München**
**22(DE)**

(54) **Sicherheitsgurtsystem.**

(57) Ein Sicherheitsgurtsystem besteht aus einem mit einer Zunge versehenen Gurt, die lösbar in einem fahrzeugfesten Schloß gehalten ist, aus einem Gurtaufroller mit einem gurt- und/oder fahrzeugsensitiven Blockiersystem für den Gurt und/oder Gurtaufroller und aus einer anpaßbaren Gurtumlenkeinrichtung im Schulterbereich einer Rückenlehne eines Fahrzeugsitzes. Um die Umlenkeinrichtung (8) einfach an die Größe der zu sichernden Person anpassen zu können, besteht diese aus einer im wesentlichen horizontal oder winkelig gehaltenen Stange, Buchse o.dgl., die mindestens in Querrichtung der Rückenlehne verstellbar sind.

Xerox Copy Centre

## Sicherheitsgurtsystem

Die Erfindung betrifft ein Sicherheitsgurtsystem mit einem mit einer Zunge versehenen Gurt, die lösbar in einem fahrzeugfesten Schloß gehalten ist, mit einem Gurtaufroller und vorzugsweise mit einem gurt- und oder fahrzeugsensitiven Blockiersystem für den Gurt und/oder Gurtaufroller und mit einer anpaßbaren Gurtumlenkeinrichtung im Schulterbereich einer Rückenlehne eines Fahrzeugsitzes.

Um im Crashfall genügende Sicherheit zu gewährleisten, ist es wünschenswert, daß der Sicherheitsgurt hinsichtlich seiner Befestigungs- und Umlenkpunkte in optimaler Weise an die Körpergröße der zu sichernden Person angepaßt ist. Während normalerweise das Gurtschloß und auch der Gurtaufroller Fixpunkte sind, kann der Gurt zwischen diesen Fixpunkten durch einen Umlenkbeschlag oder eine Umlenkeinrichtung an die Größe des Fahrers angepaßt werden. Hierbei ist es bekannt, den Umlenkbeschlag oder die Umlenkeinrichtung höhenverstellbar auszubilden, so daß sich entsprechend der jeweiligen Höhe der Umlenkeinrichtung unterschiedliche Winkel einstellen und dadurch etwa der Auflaufbereich des Gurtes über die Schulter auch bei unterschiedlichen Körpergrößen der zu sichernden Person etwa an die passende Stelle verschoben werden kann. Die richtige Anpassung des Gurtes an die Größe des Fahrers erhöht auch den Tragekomfort, was insbesondere bei dem normalen Gebrauch eine Rolle spielt, um der zu sichernden Person optimale Bewegungsfreiheit zu gewähren, ohne daß sich der Gurt in Bereiche des Körpers verlagert, wo dieser als unangenehm empfunden wird, also beispielsweise am Hals.

Aufgabe der Erfindung ist es, einen einfach anpaßbaren Umlenkbeschlag bzw. eine einfach anpaßbare Umlenkeinrichtung zu schaffen.

Erfindungsgemäß wird diese Aufgabe bei einem Sicherheitsgurtsystem der gattungsgemäßen Art nach einer ersten Ausführungsform erfindungsgemäß dadurch gelöst, daß die Gurtumlenkeinrichtung aus einer im wesentlichen horizontal gehaltenen Stange, Buchse oder dgl. besteht, die mindestens in Querrichtung der Rückenlehne verstellbar ist.

Die Erfindung beruht allgemein auf der Erkenntnis, daß die Gurtgeometrie durch eine Verlagerung des Umlenkpunktes bzw. der Umlenklinie mit mindestens einer Komponente in horizontaler Richtung an unterschiedliche Körpergrößen des Benutzers angepaßt werden kann. Während nach bekannten Lösungen von einer Höhenverstellung des Umlenkpunktes ausgegangen worden ist, liegt die Erfindung allgemein darin, daß dieser Umlenkort derart an unterschiedliche Größen des Benutzers angepaßt wird, daß die Verlagerungsrichtung eine horizontale Komponente, also eine Komponente in Querrichtung der Rückenlehne aufweist. Beispielsweise würde eine kleinere Person den Umlenkort in den Seitenbereich der Lehne verlagern, so daß der Gurt mit größerer Entfernung von dem Hals auf die Schulter aufläuft.

Die Umlenkung kann aus einer Stange bestehen, die in Führungen in Querrichtung oder geneigter Richtung verstellbar ist. Als Umlenkeinrichtung kann auch eine auf einer Stange geführte Buchse vorgesehen sein, wobei zweckmäßigerweise ring- oder flanschförmige Begrenzungen vorgesehen sind, um ein Abgleiten des Gurtes über den Umlenkbereich zu verhindern.

In weiterer Ausgestaltung der Erfindung ist vorgesehen, daß das Profil der Buchse, die auf einer Stange längsverschieblich geführt ist, einen leicht elliptischen Teil aufweist, in den ein reibungserhöhendes Material derart eingelagert ist, daß dieses bei einer einem Crash entsprechenden Zugbeanspruchung in kraftschlüssigen Eingriff mit der Führungsstange kommt.

Die Verstelleinrichtungen können von Hand anpaßbar aber auch durch Bowdenzüge verstellbar sein. Dabei kann die Einstellung automatisch von der Sitzverstellung abgeleitet werden. Ist als Stelleinrichtung ein Bowdenzug vorgesehen, kann dieser einerseits mit der Stellschiene und andererseits mit einem sitzfesten Teil verbunden sein. Nimmt die Person sodann eine ihrer Größe entsprechende Sitzeinstellung vor, wird gleichzeitig auch der Umlenkbeschlag in der richtigen Weise angepaßt.

Nach einem anderen Vorschlag wird die Aufgabe dadurch gelöst, daß der Umlenkbeschlag bzw. die Umlenkeinrichtung aus einer rückenlehnenfesten Stange, Umlenkkante o.dgl. besteht, die eine Krümmung in der Weise aufweist, daß die Längen der beiden Gurtabschnitte des durch diese umgelenkten Gurtes zwischen dem Umlenkbeschlag und dem Gurtschloß einerseits und dem Umlenkbeschlag und dem Gurtaufroller andererseits im wesentlichen immer gleich lang sind. Durch die beschriebene Geometrie ist sichergestellt, daß sich der Gurt selbständig an unterschiedliche Größen des Benutzers anpaßt. Im Falle eines Crashes zieht sich der Gurt nicht in unerwünschter Weise in eine Richtung, weil in jedem Punkt des Umlenkbeschlages bzw. der gekrümmten Stange bei einem Zug auf die Gurtabschnitte Gleichgewicht herrscht.

Nach einer vorteilhaften Ausgestaltung ist vorgesehen, daß der Umlenkbeschlag o.dgl. eine kreisbogenförmige Krümmung aufweist, die durch die Rotation der Spitze eines gleichschenkeligen Dreiecks um dessen Basis definiert ist, dessen Schenkel durch die Abstände des Umlenkbeschlages von dem Gurtschloß einerseits und dem Gurtaufroller andererseits bestimmt sind, wobei die Basis aus der Verbindungslinie zwischen dem Gurtschloß und dem Gurtaufroller besteht. Auch bei dieser Ausgestaltung ergibt sich die Gleichgewichtsbedingung daraus, daß die die Schenkel des Dreiecks bildenden Gurtabschnitte an jeder Stelle des Umlenkbeschlages gleich lang sind.

Zweckmäßigerweise befindet sich der Gurtaufroller im unteren Bereich der Rückenlehne auf der Seite des Gurtschlosses. Durch eine derartige Anordnung lassen sich die Gleichgewichtsbedingungen am besten verwirklichen.

Weitere vorteilhafte Ausgestaltungen der Erfindung sind Gegenstand weiterer Unteransprüche.

Ein Ausführungsbeispiel der Erfindung wird nachstehend anhand der Zeichnung näher beschrieben. In dieser zeigt

Fig. 1 eine Vorderansicht eines Sitzes mit einem Dreipunktgurt und in Querrichtung verstellbaren Umlenkbeschlag,

Fig. 2 eine Ansicht des Fahrzeugsitzes in Richtung des Pfeils A in Fig. 1,

Fig. 3 eine vergrößerte Ansicht der auf einer Stange verschieblich geführten, den Umlenkbeschlag bildenden Buchse,

Fig. 4 einen Querschnitt durch die Buchse nach Fig. 3,

Fig. 5 eine zweite Ausführungsform eines Sitzes mit einem auf einer winkelig angeordneten Führungsstange verschieblichen, den Umlenkbeschlag bildenden Buchse,

Fig. 6 eine Vorderansicht einer dritten Ausführungsform eines Fahrzeugsitzes mit aus einer gekrümmten Stange bestehenden Umlenkbeschlag,

Fig. 7 eine Seitenansicht des Sitzes nach Fig. 6,

Fig. 8 eine Draufsicht auf den Sitz nach den Fig. 6 und 7 und

Fig.9 eine Vorderansicht eines Sitzes mit teilweise weggebrochenen Polstern, die die Art der Befestigung der Umlenkbeschläge und Umlenkstangen sowie des Gurtaufrollers an den Rahmenteilen des Sitzes zeigt.

In der Zeichnung wird die Erfindung anhand eines sogenannten Dreipunktgurtes erläutert, wobei die drei Punkte durch das Gurtschloß, den Umlenkbeschlag und einen festen Endbeschlag bestimmt sind.

Der Fahrzeugsitz besteht aus einer gepolsterten Sitzfläche 1 mit einer winkelig zu dieser stehenden Rückenlehne 2. Ausgehend von der in das Gurtschloß 3 eingeführten und in dieser lösbar gehaltenen Zunge verläuft der Beckengurt 4 zu seinem Festpunkt 5 an dem Seitenrahmen 6 des Sitzes. Der Schultergurt 7 verläuft von dem Gurtschloß 3 über den Umlenkbeschlag 8 zu dem schematisch dargestellten Gurtaufroller 9, der im Bereich der Unterseite des Sitzes angeordnet ist.

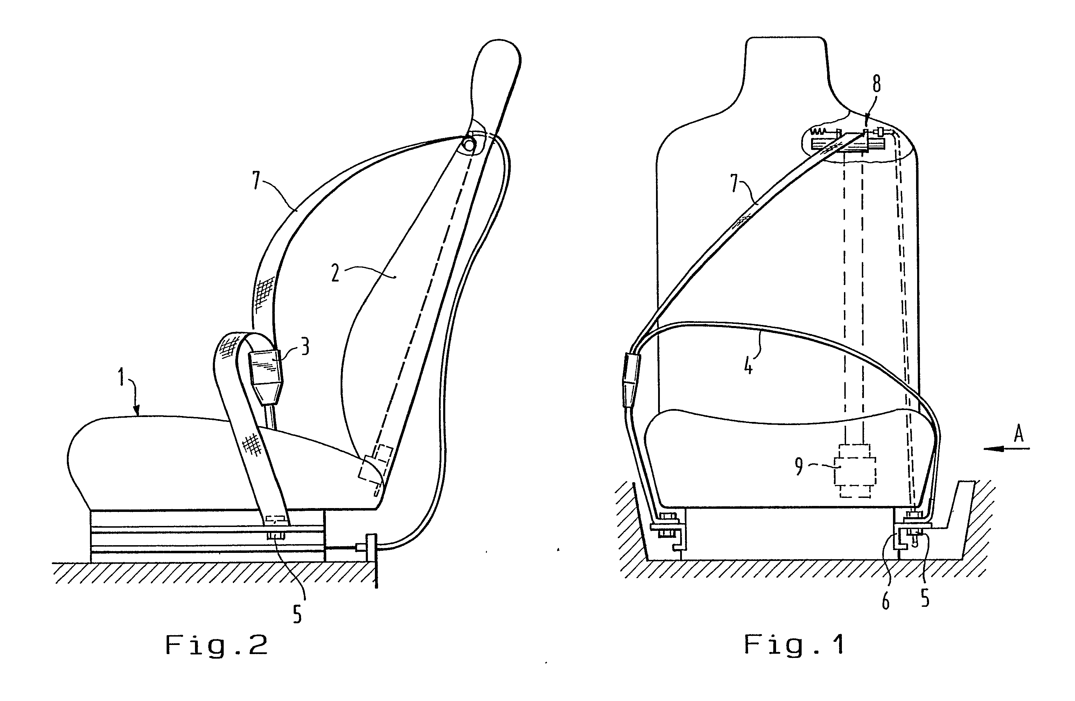

Bei dem Ausführungsbeispiel nach den Fig. 1 bis 4 besteht der Umlenkbeschlag 8 aus einer Buchse 9, die verschieblich auf einer rückenlehnenfesten Führungsstange 10 angeordnet ist. Diese Buchse 9 ist durch einen Bowdenzug verstellbar, wobei die Buchse 9 durch eine Zugfeder 11 entgegen der Zugrichtung des Bowdenzuges beaufschlagt ist, so daß die gewünschte Einstellung der Buchse 9 nur durch den Bowdenzug erfolgen kann.

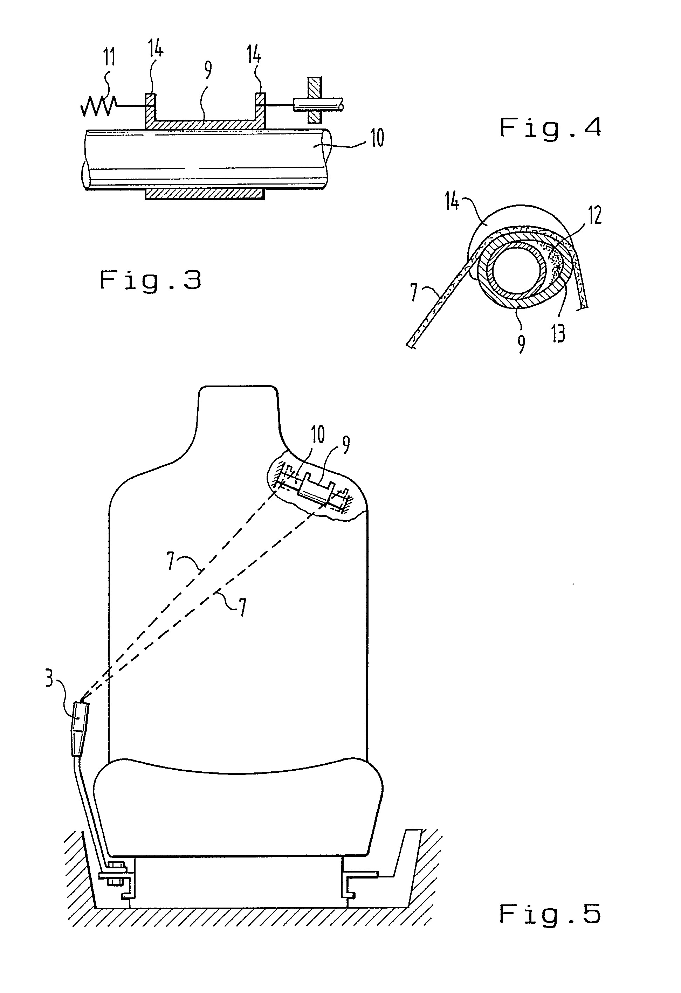

Wie aus Fig. 4 ersichtlich ist, besitzt die Buchse 9 ein Profil, das einen halbkreisförmigen und einen halbellipsenförmigen Abschnitt besitzt, so daß sich ein fingernagelförmiger Freiraum 12 ergibt, in dem reibungserhöhendes Material 13 eingelagert ist. Wird auf den Schultergurt 7 im Falle eines Crash ein erheblicher Zug ausgeübt, verformt der Gurt in seinem Umlenkbereich die Buchse derart, daß das reibungserhöhende Material 13 kraftschlüssig an der Führungsstange 10 angreift und relativ zu dieser fixiert ist.

Die Buchse ist weiterhin in ihren Seitenbereichen mit radialen Stegen 14 versehen, die ein Abgleiten des Gurtbandes verhindern.

Bei der Ausführungsform nach Fig. 5 ist die Führungsstange 10 für die den Umlenkbeschlag bildende Buchse 9 unter einem Winkel von etwa 45° zur Horizontalen geneigt, so daß der Schultergurt 7 von dem Gurtschloß etwa unter einem rechten Winkel auf die den Umlenkbeschlag bildende Buchse 9 aufläuft. Bei dieser Ausgestaltung sind die Kraftverhältnisse besonders günstig, da sich im Falle eines Crash nur sehr geringe auf die Buchse wirkende Kräfte ergeben, die bestrebt sind, diese in Längsrichtung der Führungsstange zu verschieben. Weiterhin ist diese winkelige Anordnung der Führungsstange vorteilhaft, weil die Verstellwege der Buchse 9 nur gering sind.

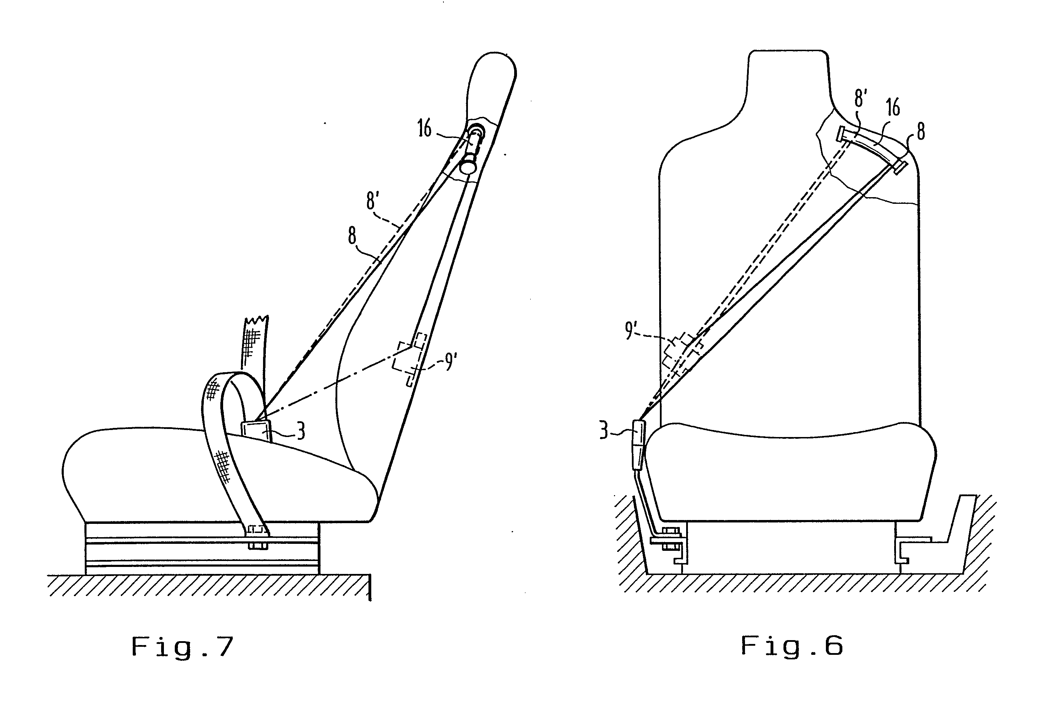

Bei dem Ausführungsbeispiel nach den Fig. 6 bis 8 besteht der Umlenkbeschlag aus einer kreisbogenförmig gekrümmten und fest mit der Rückenlehne verbundenen Stange 16. Der Gurtaufroller 9′ ist an einem Rahmenteil der Rückenlehne in dessen unteren Bereich auf der Seite des Sitzes angeordnet, an der sich das Gurtschloß 3 befindet. Diese Stellung des Gurtaufrollers 9′ ist am günstigsten. Der Gurtaufroller 9′ kann auch an anderer Stelle der Rückenlehne fest angeordnet werden, wobei die günstigste Stellung aufgrund der erforderlichen Gurtgeometrie empirisch ermittelt werden kann. Die Geometrie ist dabei so zu wählen, daß die Längen der beiden Gurtabschnitte des durch die Stange 16 umgelenkten Gurtes zwischen der Stange 16 und dem Gurtschloß 3 einerseits und der Stange 16 und dem Gurtaufroller 9′ andererseits im wesentlichen immer gleich sind. Die Anordnung und Krümmung der Stange 16 können auch durch den Verlauf der Spitze des Dreiecks mit den Endpunkten 3, 8, 9', das um seine Basislinie 3, 9' verschwenkt wird, definiert werden.

Die Längen der Schenkel dieses Dreiecks sind einerseits durch den Abstand des Gurtschlosses 3 von der Umlenkstange 16 und andererseits von dem Abstand der Stange 16 zu dem Gurtaufroller 9' bestimmt. Da die Spitze des Dreiecks immer auf der Stange liegt, ohne daß sich bei einer Verlagerung der Spitze auf dieser Stange die Abstände von den Umlenkpunkten zu dem Gurtschloß 3 einerseits und dem Gurtaufroller 9' andererseits ändern, hat die Spitze des Dreiecks, die durch die Umlenklinie des Gurtes gebildet wird, selbst dann nicht das Bestreben, in einer Richtung auszuweichen, wenn auf den Gurt einem Crash entsprechende Zugkräfte ausgeübt werden. Das Gurtband paßt sich somit automatisch unterschiedlichen Größen der zu sichernden Person an, ohne daß eine Verlagerung des Gurtes eintritt, wenn auf dieses ein Zug ausgeübt wird. Im Falle eines Crash entsteht also keine zusätzliche Gurtlose, die sich aus einer Verlagerung des Umlenkpunktes des Gurtes ergeben könnte. Selbst wenn sich der Benutzer bewegt und dadurch eine Verlagerung des Umlenkpunktes auf der gekrümmten Umlenkstange erfolgt, ändern sich die geometrischen Verhältnisse nicht, weil die Krümmung der Stange so ist, daß selbst bei einer Verlagerung des Umlenkpunktes die -Gurtbandabschnitte gleich lang bleiben.

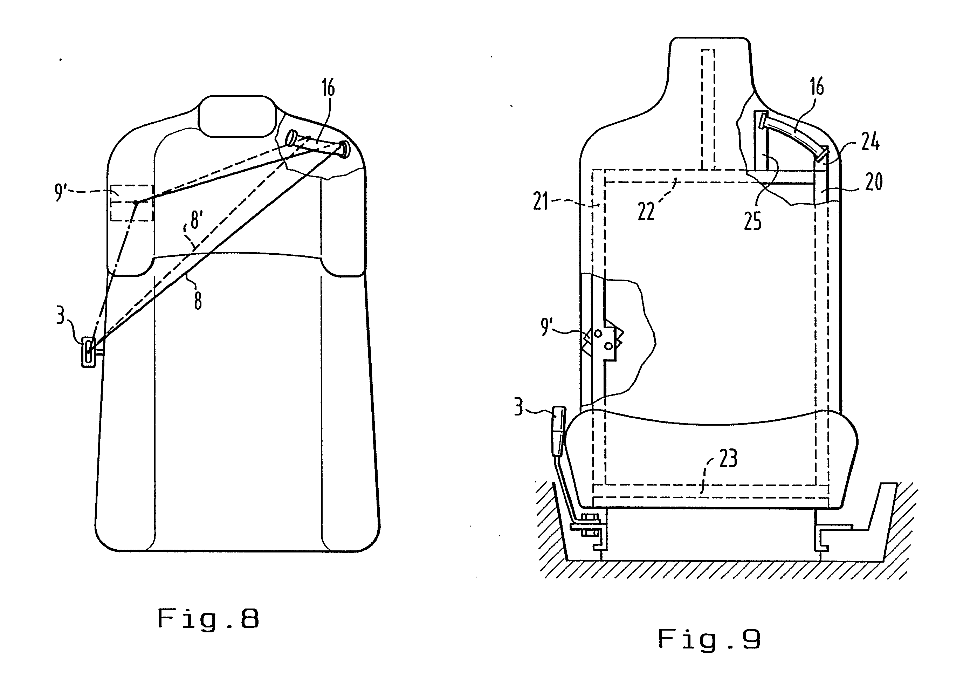

Zur Sitz- und damit fahrzeugfesten Befestigung der Umlenkbeschläge 16 bzw. der diese tragenden Stangen 10 sind diese in der aus Fig.9 ersichtlichen Weise an einem starren Tragrahmen der Rükkenlehne befestigt, die über die gelenkige Verbindung mit dem Rahmen der Sitzfläche des Sitzes verbunden ist, so daß sich eine starre Verbindung mit den Stellschienen für den Sitz ergibt.

Der Tragrahmen der Rückenlehne besteht in seiner einfachsten Ausgestaltung aus Seitenholmen 20,21, die mit Querholmen 22,23 verbunden und zweckmäßigerweise verschweißt sind. Der Rahmen ist mit angesetzten und diesen verlängernden Trägerstücken 24,25 versehen, in dessen Endbereichen die Trageinrichtungen für die Umlenkbeschläge oder die Umlenkstange 16 befestigt sind.

Der Gurtaufroller 9' ist an dem Seitenholm des Rahmens 21 befestigt, wie dies aus Fig. 9 ersichtlich ist.

Der Gurtaufroller selbst ist bekannter Bauart, so daß dieser hier näher nicht beschrieben wird.

## Ansprüche

1. Sicherheitsgurtsystem mit einem mit einer Zunge versehenen Gurt, die lösbar in einem fahrzeugfesten Schloß gehalten ist, mit einem Gurtaufroller, mit vorzugsweise einem gurt-und/oder fahrzeugsensitiven Blockiersystem für den Gurt und/oder Gurtaufroller und mit einer anpaßbaren Gurtumlenkeinrichtung im Schulterbereich einer Rückenlehne eines Fahrzeugsitzes,
**dadurch gekennzeichnet,**
daß die Gurtumlenkeinrichtung aus einer im wesentlichen horizontal oder winkelig gehaltenen Stange, Buchse oder dgl. besteht, die mindestens in Querrichtung der Rückenlehne verstellbar sind.

2. Sicherheitsgurtsystem nach Anspruch 1, dadurch gekennzeichnet, daß das Profil der Buchse neben einem halbkreisförmigen Teil einen etwa halbelliptischen Teil aufweist, in den ein reibungserhöhendes Material derart eingelagert ist, daß dieses bei einer auf den Gurt wirkenden und einem Crash entsprechenden Zugbeanspruchung in kraftschlüssigen Eingriff mit der Führungsstange kommt.

3. Sicherheitsgurtsystem nach dem Oberbegriff des Patentanspruchs 1, dadurch gekennzeichnet, daß der Umlenkbeschlag bzw. die Umlenkeinrichtung aus einer rückenlehnenfesten Stange, Umlenkkante oder dgl. besteht, die eine Krümmung in der Weise aufweist, daß die Längen der beiden Gurtabschnitte des durch diesen umgelenkten Gurtes zwischen dem Umlenkbeschlag und dem Gurtschloß einerseits und dem Umlenkbeschlag und dem Gurtaufroller andererseits im Wesentlichen immer gleich lang sind.

4. Sicherheitsgurtsystem nach Anspruch 3, dadurch gekennzeichnet, daß der Umlenkbeschlag o.dgl. eine kreisbogenförmige Krümmung aufweist, die durch die Rotation der Spitze eines gleichschenkeligen Dreiecks um dessen Basis definiert ist, dessen Schenkel durch die Abstände des Umlenkbeschlages von dem Gurtschloß einerseits und dem Gurtaufroller andererseits bestimmt sind, wobei die Basis aus der Verbindungslinie zwischen dem Gurtschloß und dem Gurtaufroller besteht.

5. Sicherheitsgurtsystem nach einem der Ansprüche 3 oder 4, dadurch gekennzeichnet, daß sich der Gurtaufroller im unteren Bereich der Rükkenlehne auf der Seite des Gurtschlosses befindet.

6. Sicherheitsgurtsystem nach einem der vorhergehenden Ansprüche, dadurch gekennzeichnet, daß der Gurtaufroller im Bereich der Schwenkachse der Rückenlehne angeordnet ist.

7. Sicherheitsgurtsystem nach einem der vorhergehenden Ansprüche, dadurch gekennzeichnet, daß der Gurtaufroller drehbar auf einer Achse gelagert ist, die parallel zur Fahrtrichtung des Kraftfahrzeuges montiert ist.

8. Sicherheitsgurtsystem nach einem der vorhergehenden Ansprüche, dadurch gekennzeichnet, daß der Gurtaufroller im Normalbetrieb in einer senkrechten Position gehalten ist und erst im Crashfall um seine Schwenkachse schwenkt.

Fig.2

Fig.1

EP 0 374 893 A2

**Fig.4**

**Fig.3**

**Fig.5**

Fig.6

Fig.7

Fig.9

Fig.8